# EUROPÄISCHE PATENTSCHRIFT

(11) **EP 0 590 166 B1**
(45) Veröffentlichungstag und Bekanntmachung des Hinweises auf die Patenterteilung: **17.01.1996**
(21) Anmeldenummer: 92116267.3
(22) Anmeldetag: 23.09.1992
(51) Int. Cl.: B60H 1/24

(54) **Belüftungsvorrichtung für einen Raum, insbesondere einen Fussraum in einem Kraftfahrzeug**
Ventilation device for an area, especially the footspace of an automotive vehicle
Dispositif de ventilation d'un espace, spécialement l'espace des pieds dans une véhicule automobile

(43) Veröffentlichungstag der Anmeldung: 06.04.1994
(73) Patentinhaber: SIEMENS AKTIENGESELLSCHAFT, D-80333 München (DE)
(72) Erfinder: Prause, Martin, Dipl.-Ing. (FH), W-8630 Coburg (DE); Soethout, Freddie, Dipl.-Ing. (FH), W-5024 Pulheim (DE)

(56) Entgegenhaltungen:
- EP-A- 0 503 987
- DE-A- 3 741 839
- DE-C- 956 740
- DE-U- 1 785 062
- DE-U- 1 845 713
- FR-A- 2 229 024
- NL-A- 69 782
- US-A- 1 690 723

## Beschreibung

Die Erfindung bezieht sich auf eine Belüftungsvorrichtung für einen Raum, insbesondere einen Fußraum in einem Kraftfahrzeug, gemäß Patentanspruch 1.

Der Erfindung liegt die Aufgabe zugrunde, mit möglichst geringem fertigungs- bzw. montagetechnischen Aufwand und bei kompakter Baugröße eine Verbesserung des Belüftungskomforts insbesondere im Fußraum eines Kraftfahrzeuges durch eine impulsarme über den gesamten Raum gleichmäßig diffus verteilte Belüftung bzw. Temperierung gewährleisten zu können.

Durch die DE-A-3 610 188 bzw. die DE-A-3 119 557 sind Klima- bzw. Lüftungsanlagen für Kraftfahrzeuge bekannt, aus denen Luftkanäle abgezweigt sind, aus deren über die Breite des Fußraumes verteilte endseitige Austrittsöffnungen die Luft strahlartig in den Fußraum geblasen wird.

Aus der EP-A-0 425 721 ist eine Anordnung zur Belüftung des gesamten Fahrgastraumes eines Kraftfahrzeuges bekannt, bei der von einer Wurfdüse auf der Mittelkonsole ein kanalloser gebündelter Wurfstrahl gegen die luftdurchlässige Dachverkleidung geblasen wird, durch diese hindurchtritt, sich im Zwischenraum zwischen der Dachverkleidung und dem Fahrzeugdach nach Rückprall an diesem Fahrzeugdach allseitig verteilt und als diffuse Strömung durch die Dachverkleidung wieder in den Fahrzeuginnenraum zurücktritt.

Die Lösung der vorgenannten Aufgabe gelingt durch die Lehre des Anspruchs 1; vorteilhafte Ausgestaltungen der Erfindung sind jeweils Gegenstand der Unteransprüche.

Durch die erfindungsgemäße Belüftungsvorrichtung ist es möglich, unter Verzicht auf gesonderte Lüftungskanäle eine gleichmäßige und diffuse Luftverteilung bzw. Temperierung im gesamten Fußraum dadurch zu erreichen, daß sich die an der einen Wand nach Austritt aus der Ringlamellendüse verteilten Luftströme einerseits und die an der gegenüberliegenden Wand nach Auftreffen des Wurfstrahls verteilende Luftströme andererseits zunächst über die Fußraumwandungen fließen, ihre Strömungsgeschwindigkeit abbremsen, impulsarm aufeinandertreffen, ihre Wärme austauschen und im Sinne einer gleichmäßigen Temperatur- und Luftmischung die Fußmitte und damit den gesamten Fußraum mit hohem Belüftungskomfort ausfüllen.

Zur Erzielung einer besonders kompakten Bauform sind die Wurfdüse und die Ringlamellendüse als Kombinationsdüse mit zu einer zu der zentralen Wurfdüse konzentrisch und im wesentlichen zu deren Achse senkrecht verlaufenden Prallflächen jeweils an einer Seitenwand der Mittelkonsole, vorzugsweise unter direktem Anschluß an eine zentrale Heizungs- bzw. Klimaanlage angebracht.

Die Erfindung sowie weitere vorteilhafte Ausgestaltungen der Erfindung gemäß Merkmale der Unteransprüche werden im folgenden anhand schematisch dargestellter Ausführungsbeispiele in den Zeichnungen näher erläutert; darin zeigen:
- FIG 1: die dachseitige Ausschnittdraufsicht auf den rechten Fußraum mit den Luftströmungen aus der Wurfdüse und der Ringlamellendüse
- FIG 2: in einem axialen Schnitt den Fußraum gemäß FIG mit einer Draufsicht auf eine Kombinationsdüse
- FIG 3: im axialen Schnitt eine Kombinationsdüse mit zentraler Wurfdüse und dazu konzentrischer Teilringlamellendüse
- FIG 4: die axiale mündungsseitige Draufsicht auf die Kombinationsdüse gemäß FIG 3

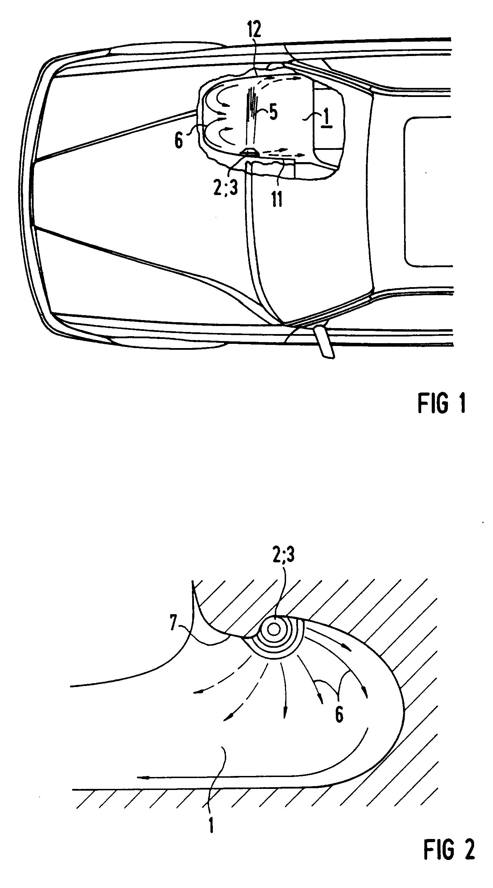

FIG 1 zeigt die dachseitige Draufsicht auf den vorderen Teil eines Personenkraftwagens mit durch einen Dachausschnitt sichtbarem rechten Fußraum und darin angedeuteten Luftströmungen der an der einen Mittelkonsolen-Seite 12 angeordneten Kombinationsdüse 2;3 mit einem auf die gegenüberliegende Seitenwand 12 gerichteten Wurfstrahl 5 der Wurfdüse 3 und den über die eine Seitenwand 12 verteilten Prallplattenströmung 6 der Ringlamellendüse 2. FIG 2 zeigt die vorteilhafte Anordnung der Kombinationsdüse 2;3 oberhalb des Beinraumes des Fußraumes 1 und unmittelbar unter der Unterseite des Armaturenbrettes 7.

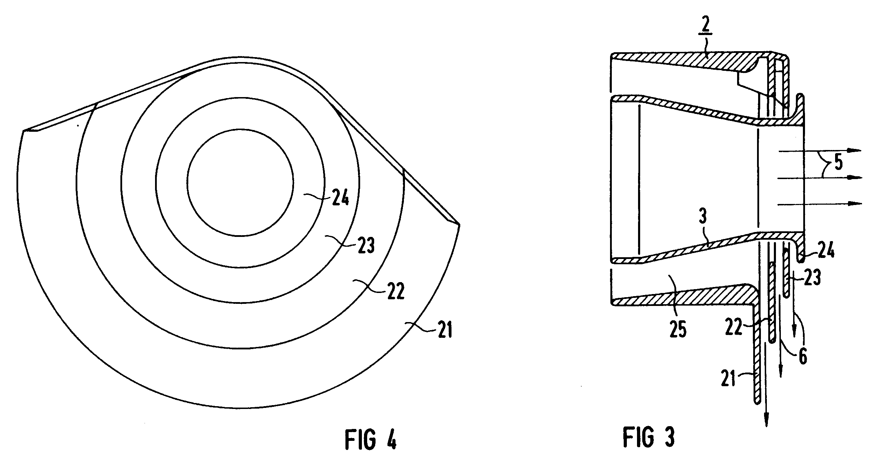

FIG 3 zeigt den axialen Querschnitt durch eine Kombinationsdüse mit einer zentralen Wurfdüse 3 und einem im wesentlichen axial austretenden kanallosen gebündelten Wurfstrahl 5 und mit einer zur Wurfdüse 3 konzentrischen Ringlamellendüse 2, die als mehrstufiger Prallplattenverteiler im wesentlichen senkrecht zur Richtung des Wurfstrahls 5 der Wurfdüse 3 verlaufenden Prallplatten 21-24 mit zum Düsenende sich stufenweise vermindernder radialer Erstreckung derart ausgebildet ist, daß die austretende Prallplattenströmung 6 im wesentlichen parallel zu der einen Seitenwand verläuft, in die die Kombinationsdüse 2;3 eingebaut ist.

Entsprechend dem Einbau der Kombinationsdüse 2;3 gemäß FIG 2 unterhalb der Unterkante des Armaturenbrettes 7 ist nach einer Ausgestaltung der Erfindung die Ringlamellendüse 2 gemäß FIG 3,4 als Teilringlamellendüse derart ausgebildet, daß in Richtung des Armaturenbrettes die Prallplatten 21-24 radial verkürzt und für einen Luftaus- bzw. Durchtritt gesperrt sind.

In vorteilhafter Weise sind für die Wurfdüse 3 einerseits bzw. die Ringlamellendüse 2 andererseits getrennte, insbesondere getrennt absperrbare und/oder getrennt temperierbare Luftzufuhrkanäle vorgesehen; im vorliegenden, insbesondere aus FIG 3 ersichtlichen Fall, ist dazu die zentrale Wurfdüse 3 bzw. deren Luftzuführung von einem konzentrischen Ringrohr 25 umgeben. Durch die Trennung von Ringlamellendüse 2 einerseits und Wurfdüse 3 andererseits kann durch unterschiedlich temperierbare Luftmengen auf einfache Weise auf unterschiedliche thermische Anforderungen von Fußraum-Innenwand einerseits und Fußraum-Außenwand andererseits reagiert werden kann.

Die Luftströme der Wurfdüse 3 einerseits bzw. der Ringlamellendüse 2 andererseits sind im Sinne einer impulsarmen diffusen gegenseitigen Vermischung im Mittenbereich des Raumes, insbesondere der jeweiligen durch die Seitenwände 11,12 begrenzten zu der Mittelkonsole beidseitigen Fußräume hinsichtlich Ihrer Luftmenge bzw. Luftgeschwindigkeit bzw. Temperierung ausgebildet. So wie auf einfache Weise, z. B. durch segmentweises Verkürzen oder Versperren der Prallplatten 21-24 auf die Geometrie des Anbringungsortes der Düsen Einfluß genommen werden kann, ist es möglich, durch die Anzahl der Prallplatten, deren Abstand zueinander bzw. deren Stärke in Anpassung an die Wurfdüse eine Abstimmung dahingehend in einfacher Weise zu erreichen, daß über beide Düsensysteme etwa gleichgroße Luftströme abfließen.

## Patentansprüche

1. Belüftungsvorrichtung für einen Raum, insbesondere einen Fußraum (1) in einem Kraftfahrzeug, mit den Merkmalen:
a) An der einen Seitenwand (11) des Raumes ist eine Wurfdüse (3)mit einem auf die gegenüberliegende Seitenwand (12) des Raumes im Sinne einer entlang dieser allseitigen Luft-Verteilung gerichteten wandungslosen gebündelten Wurfstrahl (5) angeordnet;
b) An der einen Seitenwand (11) des Raumes ist eine Ringlamellendüse (2) mit im Sinne einer entlang dieser einen Seitenwand (11) allseitigen Luft-Verteilung ausgerichteten Prallplatten (21-24) angeordnet.

2. Belüftungsvorrichtung nach Anspruch 1 mit dem Merkmal:
c) Die Wurfdüse (3) und die Ringlamellendüse (2) sind zu einer Kombinationsdüse (2;3) mit konzentrisch und im wesentlichen senkrecht zu dem Wurfstrahl (5) der Wurfdüse (3) verlaufenden Prallplatten (21-24) zusammengefaßt.

3. Belüftungsvorrichtung nach Anspruch 2 mit dem Merkmal:
d) Die Wurfdüse (3) ist schwenkbar innerhalb der Ringlamellendüse (2) angeordnet.

4. Belüftungsvorrichtung nach Anspruch 2 und/oder 3 mit dem Merkmal:
e) Für die Luftzufuhr zu der Ringlamellendüse (2) ist ein zur axial mittigen Luftzufuhr der Wurfdüse (3) konzentrisches Ringrohr (25) vorgesehen.

5. Belüftungsvorrichtung nach einem der Ansprüche 1-4 mit dem Merkmal:
f) Die Ringlamellendüse (2) ist als mehrstufiger, insbesondere mit Prallplatten (21-24) stufenweise zunehmender radialer Erstreckung versehener, Prallplattenverteiler ausgebildet.

6. Belüftungsvorrichtung nach einem der Ansprüche 1-5 mit dem Merkmal:
g) Die Wurfdüse (3) und die Ringlamellendüse (2) sind jeweils an einer Seitenwand (11) einer Mittelkonsole mit beidseitigen Fußräumen (1) eines Kraftfahrzeuges, insbesondere mit direktem Anschluß an eine Heizungs- und/oder Klimaanlage, angeordnet.

7. Belüftungsvorrichtung nach Anspruch 6 mit dem Merkmal:
h) Die Wurfdüse (3) und die Ringlamellendüse (2) sind im Fußraum (1) oberhalb des Beinbereichs, insbesondere in Nähe der Unterseite des Armaturenbrettes (7), angeordnet.

8. Belüftungsvorrichtung nach einem der Ansprüche 1-7, mit dem Merkmal:
i) Die Ringlamellendüse (2) ist als Teilringlamellendüse mit, insbesondere in Richtung des Armaturenbrettes, segmentweise für einen Luftaustritt gesperrten bzw. radial verkürsten Prallplatten (21-24) ausgebildet.

9. Belüftungsvorrichtung nach einem der Ansprüche 1-8 mit dem Merkmal:
j) Die Wurfdüse (3) einerseits bzw. die Ringlamellendüse (2) andererseits sind an getrennte, insbesondere getrennt absperrbare und/oder getrennt temperierbare, Luftzufuhrkanäle angeschlossen.

10. Belüftungsvorrichtung nach einem der Ansprüche 1-9 mit dem Merkmal:
k) Die Luftströme (Wurfstrahl 5 bzw. Prallplattenstrahl 6) der Wurfdüse (3) einerseits bzw. der Ringlamellendüse (2) andererseits sind im Sinne einer impulsarmen diffusen gegenseitigen Vermischung im Mittenbereich des Raumes, insbesondere des jeweiligen durch die Seitenwände (11;12) begrenzten Fußraumes (1), ausgebildet.

## Claims

1. A ventilation device for an area, in particular a foot space (1) in a motor vehicle, having the features:
a) at the one side wall (11) of the area a projection nozzle (3), having a wall-free bunched projected jet (5) directed to the opposite side wall (12) of the space in the manner of an all-round air distribution along said wall, is provided
b) at the one side wall (11) of the area a circular disk nozzle (2), having baffle plates (21 - 24) directed in the manner of an all-round air distribution along this one side wall (11), is disposed.

2. A ventilation device according to Claim 1 with the feature:
c) The projection nozzle (3) and the circular disk nozzle (2) are combined to form a combination nozzle (2; 3) with baffle plates (21-24) extending concentrically and substantially perpendicular to the projected jet (5) of the projection nozzle (3).

3. A ventilation device according to Claim 2 with the feature:
d) The projection nozzle (3) is swivellably disposed inside the circular disk nozzle (2).

4. A ventilation device according to Claim 2 and/or 3 with the feature:
e) An annular pipe (25) concentric to the axially central air supply of the projection nozzle (3) is provided for the air supply to the circular disk nozzle (2).

5. A ventilation device according to one of Claims 1 - 4 with the feature:
f) The circular disk nozzle (2) is constructed as a multi-step baffle plate distributor provided in particular with baffle plates (21 - 24) having a radial extension increasing step-by-step.

6. A ventilation device according to one of Claims 1 - 5 with the feature:
g) The projection nozzle (3) and the circular disk nozzle (2) are disposed at a side wall (11) of a central console with foot spaces (1), on both sides, of a motor vehicle, in particular directly connected to a heating and/or air conditioning installation.

7. A ventilation device according to Claim 6 with the feature:
h) the projection nozzle (3) and the circular disk nozzle (2) are disposed in the foot space (1) above the leg region, in particular in the vicinity of the lower side of the dashboard (7).

8. A ventilation device according to one of Claims 1 - 7 with the feature:
i) The circular disk nozzle (2) is constructed as a partial circular disk nozzle with baffle plates (21 - 24), which are obstructed or radially shortened segment-by-segment for egress of air, in particular in the direction of the dashboard.

9. A ventilation device according to one of Claims 1 - 8 with the feature:
j) The projection nozzle (3) on the one hand and the circular disk nozzle (2) on the other hand are connected to separate air supply ducts, which in particular can be shut off separately and/or subject to separate temperature controls.

10. A ventilation device according to one of Claims 1 - 9 with the feature:
k) The air streams (projected jet 5 and baffle plate jet 6) of the projection nozzle (3) on the one hand and of the circular disk nozzle (2) on the other hand are formed in the manner of a low-pulse diffuse inter-mingling in the central region of the area, in particular of the respective foot space (1) limited by the side walls (11; 12).

## Revendications

1. Dispositif de ventilation pour un habitacle, en particulier pour une partie inférieure de l'habitacle (1) d'un véhicule automobile, selon les caractéristiques :
a) il est prévu sur une paroi latérale (11) de l'habitacle une buse de sortie d'air (3) avec un jet d'air (5) concentré en faisceau sans parois, orienté vers la paroi latérale (12) opposée de l'habitacle en vue d'une répartition de l'air le long de celle-ci dans toutes les directions,
b) il est prévu sur une paroi latérale (11) de l'habitacle une buse à lamelles annulaires (2) avec des plaques (21-24) orientées en vue d'une répartition de l'air le long de cette paroi latérale (11) dans toutes les directions.

2. Dispositif de ventilation selon la revendication 1, selon la caractéristique :
c) la buse de sortie d'air (3) et la buse à lamelles annulaires (2) sont réunies de façon à former une buse combinée (2,3) avec des plaques (21-24) orientées de façon concentrique et sensiblement perpendiculaire au jet (5) de la buse de sorte d'air (3).

3. Dispositif de ventilation selon la revendication 2, selon la caractéristique :
d) la buse de sortie d'air (3) est disposée dans la buse à lamelles annulaires (2) de façon à pouvoir pivoter.

4. Dispositif de ventilation selon la revendication 2 et/ou 3, selon la caractéristique :
e) il est prévu pour amener l'air à la buse à lamelles annulaires (2) un tube annulaire (25) concentrique à l'arrivée d'air centrale dans le sens axial de la buse de sortie d'air (3).

5. Dispositif de ventilation selon l'une quelconque des revendications 1 à 4, selon la caractéristique :
f) la buse à lamelles annulaires (2) est conçue comme un distributeur à plaques à plusieurs étages, pourvu en particulier de plaques (21-24) dont l'étendue dans le sons radial augmente par gradins.

6. Dispositif de ventilation selon l'une quelconque des revendications 1 à 5, selon la caractéristique :
g) la buse de sortie d'air (3) et la buse à lamelles annulaires (2) sont disposées à chaque fois sur une paroi latérale (11) d'une console centrale pour les parties inférieures de l'habitacle d'un véhicule automobile, en particulier avec un raccordement direct à une installation de chauffage et/ou de climatisation.

7. Dispositif de ventilation selon la revendication 6, selon la caractéristique :
h) la buse de sortie d'air (3) et la buse à lamelles annulaires (2) sont disposées dans la partie inférieure de l'habitacle (1) au-dessus de la zone recevant les jambes, en particulier à proximité de la face inférieure du tableau de bord (7).

8. Dispositif de ventilation selon l'une quelconque des revendications 1 à 7, selon la caractéristique :
i) la buse à lamelles annulaires (2) est conçue comme une buse à lamelles en forme de segments annulaires, avec des plaques (21-24) segmentaires, pour une sortie de l'air, raccourcies dans le sens radial ou bloquées en particulier en direction du tableau de bord.

9. Dispositif de ventilation selon l'une quelconque des revendications 1 à 8, selon la caractéristique :
j) la buse de sortie d'air (3), d'une part, respectivement la buse à lamelles annulaires (2), d'autre part, sont raccordées à des canaux d'arrivée d'air séparés, pouvant en particulier être bloqués séparément et/ou dont la température peut être réglée séparément.

10. Dispositif de ventilation selon l'une quelconque des revendications 1 à 9, selon la caractéristique :
k) les flux d'air (jet d'air 5 et jet des plaques 6) de la buse de sortie d'air (3), d'une part, et de la buse à lamelles annulaires (2), d'autre part, sont conçus en vue de se mélanger l'un avec l'autre avec des remous faibles dans la zone centrale de l'habitacle, en particulier dans les parties inférieures de l'habitacle (1), délimitées par les parois latérales (11,12).
